# EUROPEAN PATENT SPECIFICATION

(11) **EP 3 333 014 B1**
(45) Date of publication and mention of the grant of the patent: **07.08.2019**
(21) Application number: 17205527.9
(22) Date of filing: 05.12.2017
(51) Int. Cl.: B60P 3/077

(54) **STOP DEVICE FOR VEHICLE TRANSPORTER**
STOPPVORRICHTUNG FÜR FAHRZEUGTRANSPORTER
DISPOSITIF D'ARRÊT POUR TRANSPORTEUR DE VÉHICULE

(30) Priority: 06.12.2016 IT 201600123903
(43) Date of publication of application: 13.06.2018
(73) Proprietor: Officina Meccanica Migliore Livio, 10026 Santena (Torino) (IT)
(72) Inventor: MIGLIORE, Mr. Livio, I-10026 Santena (Torino) (IT)
(74) Representative: Buzzi, Franco

(56) References cited:
- CN-A- 101 817 338
- FR-A- 1 519 795
- FR-A3- 2 684 054
- GB-A- 1 481 691

## Description

### Field of the invention

The present invention generally regards vehicle transporters and more in particular it regards stop devices used on vehicle transporters for locking the wheels of the vehicles transported thereon, such as disclosed in FR 2684054 A3.

### State of the prior art

Vehicle transporters conventionally have a loading deck provided with anchoring holes for positioning and locking the stop devices, which comprise a support base on the loading deck and a retainer bar located above the base and suitable to cooperate in a stop relationship with a wheel of a vehicle. The support base carries a first and a second engagement assembly each comprising a hook for insertion into an anchoring hole of the loading deck of the vehicle transporter, a helical spring, a cam member cooperating from beneath the retainer bar under the action of the spring, and a manual control rod for rotating the cam member in two different positions in which the hook is facing on opposite sides with respect to the retainer bar.

The support base of the stop device usually extends - in a parallel continuous fashion - beneath the retainer bar and it has two end holes for mounting the two engagement assemblies.

With this arrangement, the assembly of the stop device is relatively complex in that it requires, for each engagement assembly, the positioning of the spring and the cam member between the base and the retainer bar, thus the insertion of the hook from beneath the base through the corresponding hole, and thus the joining between the cam member and the hook through a transversal pin inserted through respective corresponding holes.

These operations, carried out for each of the two engagement assemblies, are challenging, long and thus costly.

### Summary of the invention

The object of the invention is to solve the aforementioned problem in a simple and efficient manner, and this object is attained thanks to the fact that the support base consists in a pair of plates separated from each other, located beneath the ends of the retainer bar and each formed with a lateral notch facing towards the interior of the stop device, and in that each engagement assembly is pre-assembled and mounted between the respective base plate and the retainer bar by means of lateral insertion into the relative notch.

Thanks to this solution idea, and in particular the fact that the two engagement assemblies are pre-assembled and thus subsequently mounted on the two base plates, the stop device is manufactured in a considerably simplified and more economic manner.

A circular locking ring, which is inserted into a complementary recess of an auxiliary plate rigidly fixed on the respective support plate is conveniently interposed between the spring of each pre-assembled engagement assembly and the respective base plate. This recess is arranged above the notch of the support plate and it has an angular width greater than 180°.

### Brief description of the drawings

The invention will now be described in detail with reference to the attached drawings, provided purely by way of non-limiting example, wherein:
- figure 1 is a schematic perspective view of a stop device for vehicle transporters according to the invention,
- figure 2 is an exploded perspective view of a part of the stop device of figure 1,
- figure 3 is an exploded perspective view of one of the engagement assemblies of the stop device prior to assembly thereof, and
- figure 4 is a view analogous to figure 3 showing the pre-assembled engagement assembly and prior to being mounted on the stop device.

### Detailed description of the invention

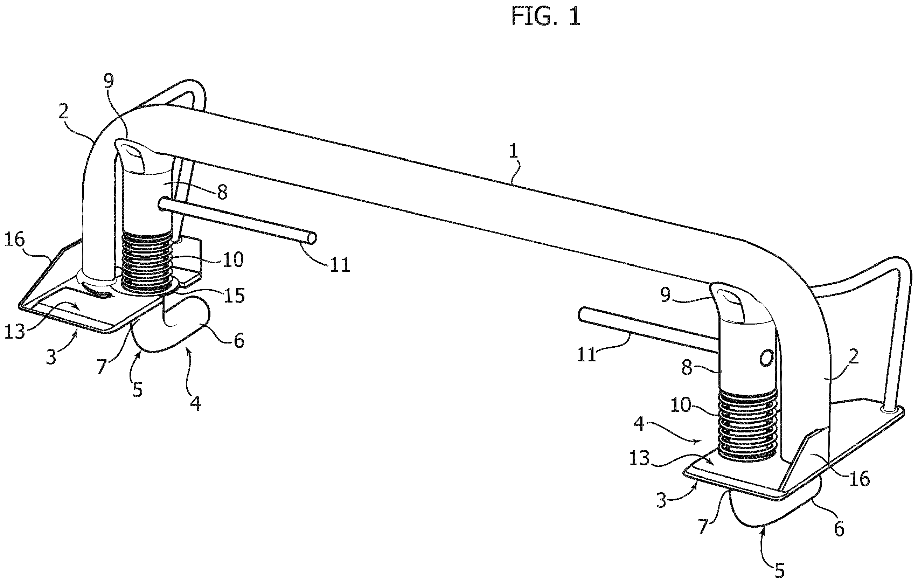

Initially referring to figure 1, the stop device according to the invention, designated to be applied in a known fashion to the loading deck of a vehicle transporter provided with anchoring holes, essentially consists in a stop element 1 formed by a robust horizontal bar with ends 2 folded vertically downwards, and a base for resting on the loading deck of the vehicle transporter. According to one of the distinctive characteristics of the invention the base consists in a pair of mutually separated horizontal plates 3, 3 which are welded to the ends 2 of the retainer bar 1.

Two engagement assemblies for removably anchoring the stop device to the loading deck of the vehicle transporter are indicated with 4. Each engagement assembly 4 comprises, also in a generally known manner, a hook 5 formed by a horizontal tooth 6 configured to engage an anchoring hole of the loading deck of the vehicle transporter, and a vertical stem 7 whose top part is fixed in a bushing 8 obtained at the top part in a manner similar to a cam 9. The stem 7 of the hook 5 traverses the base plate 3, as outlined hereinafter, and a compression helical spring 10 which is interposed between the base plate 3 and the bushing 8 and it presses the cam 9 from beneath against the retainer bar 1. A manual control rod 11 traverses the bushing 8 and the stem 7 of the hook 5 and it can be actuated to rotate the engagement assembly 4 in one or the other of the two opposite positions in which - due to the cooperation between the cam member 9 and the stop element 1 - the horizontal part 6 of the hook 5 is rotated by 180°.

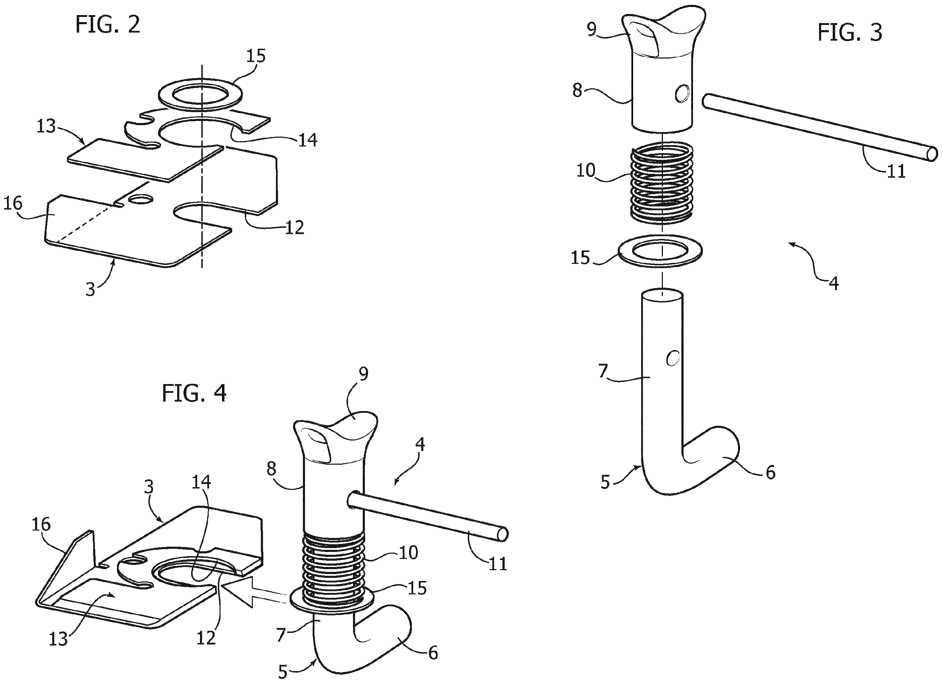

According to another distinctive characteristic of the invention, each engagement assembly 4 is pre-assembled and subsequently mounted in the respective base plate 3 in a relatively simple and easy manner. To this end, and as illustrated further in detail in figure 2, each base plate 3 is formed with a lateral notch 12, facing towards the interior of the stop device. An auxiliary plate 13 formed with a recess 14 arranged above the notch 12 and having an angular width greater than 180°, is fixed on the base plate 3 by means of welding. The recess 14 is designated to receive a circular ring 15 resting on the base plate 3, which is thus locked against the effects of lateral movement with respect to the base plate 3 and thus the related notch 12.

Figure 3 represents the various components of an engagement assembly 4 prior to being pre-assembled, and figure 4 shows the engagement assembly 4 in the pre-assembled condition in which the stem 7, subsequently to insertion thereof through the ring 15 and the helical spring 10, is fixed into the bushing 8 by welding.

The engagement assembly 4 thus pre-assembled, is thus mounted on the relative base plate 3 by introducing the stem 7 of the hook 6 into the notch 12 sideways and thus positioning the ring 15 into the recess 14 of the auxiliary plate 13 from above. To carry out such insertion, the spring 10 must be compressed to an extent such to enable the cam 9 to be engaged beneath the retainer bar 1.

Stiffening elements 16 projecting from each base plate 3 and welded to the ends 2 of the retainer bar 1 are conveniently provided for reinforcing such base plates 3 against the effects of torsional stress.

In light of the description above, it is clear that the stop device according to the invention can be manufactured in a considerably simpler and economic manner with respect to conventional stop devices whose engagement assemblies are assembled subsequently to mounting the relative components on a continuous support base.

Obviously, the construction details and the embodiments may widely vary with respect to what has been described and illustrated.

## Claims

1. Stop device for vehicle wheels designed to be applied to the loading deck of a vehicle transporter provided with anchoring holes, said stop device comprising a base (3, 3) for resting on the loading deck of the vehicle transporter and a retainer bar (1) projecting from the base (3, 3) and suitable to cooperate in a retaining relationship with a vehicle wheel, the support base (3, 3) carrying a pair of engagement assemblies (4, 4) each comprising a hook (5) to be fitted into an anchoring hole of the loading deck of the vehicle transporter, a helical spring (10), a cam member (9) co-operating from beneath with the retainer bar (1) under the action of the spring (10), and a manual control rod (11) to rotate the cam member (9) in two different positions in which the hook (5) is facing to opposite sides with respect to the retainer bar (1), **characterised in that** the support base consists of a pair of plates (3, 3) separate from each other, located beneath the ends (2) of the retainer bar (1) and each formed with a lateral notch (12) facing towards the interior of the stop device, and **in that** each engagement assembly (4) is pre-assembled and is mounted between the respective base plate (3) and the retainer bar (1) following lateral fitting thereof into the related notch (12).

2. Stop device according to claim 1, **characterised in that** a circular locking ring (15) is interposed between the spring (10) of each pre-assembled engagement assembly (4) and the respective base plate (3) .

3. Stop device according to claim 2, **characterised in that** the locking ring (15) is inserted within a complementary recess (14) of an auxiliary plate (13) fixed on the respective base plate (3), said recess (14) being arranged above the notch (12) of the base plate (3) and having an angular width greater than 180°.

## Patentansprüche

1. Stoppvorrichtung für Fahrzeugräder, die zur Anwendung an einer Ladefläche eines Fahrzeugtransporters, an dem Verankerungslöcher vorgesehen sind, ausgestaltet ist, wobei die Stoppvorrichtung einen Sockel (3, 3), der auf der Ladefläche des Fahrzeugtransporters aufliegt, und einen Halteriegel (1), der aus dem Sockel (3, 3) hervorragt und dazu geeignet ist, in einer zurückhaltenden Zuordnung mit einem Fahrzeugrad zusammenzuwirken, wobei der Stützsockel (3, 3) ein Paar Verbindungsvorrichtungen (4, 4) trägt, die jeweils einen Haken (5) zur Anbringung in ein Verankerungsloch der Ladefläche des Fahrzeugtransporters, eine Schraubenfeder (10), ein Nockenelement (9), das von unten mit dem Halteriegel (1) unter Einwirkung der Feder (10) zusammenwirkt, und eine manuelle Steuerstange (11) zum Drehen des Nockenelements (9) in zwei verschiedene Positionen, in denen der Haken (5) entgegengesetzten Seiten in Bezug auf den Halteriegel (1) zugewandt ist, umfasst, **dadurch gekennzeichnet, dass** der Stützsockel aus einem Paar voneinander getrennter Platten (3, 3) besteht, die unter den Enden (2) des Halteriegels (1) angeordnet sind und jeweils mit einer dem Inneren der Stoppvorrichtung zugewandten seitlichen Aussparung (12) ausgebildet sind, und dadurch, dass jede Verbindungsvorrichtung (4) vormontiert und zwischen dem entsprechenden Stützsockel (3) und dem Halteriegel (1) nach dem Einpassen dessen in der seitlichen Aussparung (12) angebracht ist.

2. Stoppvorrichtung nach Anspruch 1, **dadurch gekennzeichnet, dass** ein runder Arretierring (15) zwischen der Feder (10) jeder vormontierten Verbindungsvorrichtung (4) und der entsprechenden Sockelplatte (3) angeordnet ist.

3. Stoppvorrichtung nach Anspruch 2, **dadurch gekennzeichnet, dass** der Arretierring (15) in eine komplementäre Ausnehmung (14) einer zweiten Platte (13) eingesetzt ist, die auf der entsprechenden Sockelplatte (3) befestigt ist, wobei die Ausnehmung (14) über der Aussparung (12) der Sockelplatte (3) angebracht ist und eine Winkelbreite aufweist, die größer als 180° ist.

## Revendications

1. Dispositif d'arrêt pour des roues de véhicule conçu pour être appliqué au plateau de chargement d'un transporteur de véhicule pourvu de trous d'ancrage, ledit dispositif d'arrêt comprenant une base (3, 3) pour reposer sur le plateau de chargement du transporteur de véhicule et une barre de retenue (1) faisant saillie depuis la base (3, 3) et convenant pour coopérer dans une relation de retenue avec une roue de véhicule, la base (3, 3) de support portant une paire d'ensembles de prise (4, 4) chacun comprenant un crochet (5) destiné à être monté dans un trou d'ancrage du plateau de chargement du transporteur de véhicule, un ressort hélicoïdal (10), un élément de came (9) coopérant par le dessous avec la barre de retenue (1) sous l'action du ressort (10), et une tige de commande manuelle (11) pour faire tourner l'élément de came (9) dans deux positions différentes dans lesquelles le crochet (5) fait face à des côtés opposés par rapport à la barre de retenue (1), **caractérisé en ce que** la base de support consiste en une paire de plaques (3, 3) séparées l'une de l'autre, situées sous les extrémités (2) de la barre de retenue (1) et chacune formée avec une fente latérale (12) dirigée vers l'intérieur du dispositif d'arrêt, et **en ce que** chaque ensemble de prise (4) est pré-assemblé et est monté entre la plaque de base (3) respective et la barre de retenue (1) suivant des montages latéraux de celle-ci dans la fente latérale (12).

2. Dispositif d'arrêt selon la revendication 1, **caractérisé en ce qu'**une bague de verrouillage (15) circulaire est intercalée entre le ressort (10) de chaque ensemble de prise (4) pré-assemblé et la plaque de base (3) respective.

3. Dispositif d'arrêt selon la revendication 2, **caractérisé en ce que** la bague de verrouillage (15) est insérée dans un évidement (14) complémentaire d'une plaque auxiliaire (13) fixée sur la plaque de base (3) respective, ledit évidement (14) étant agencé au-dessus de la fente (12) de la plaque de base (3) et ayant une largeur angulaire supérieure à 180°.
